(19) Europäisches Patentamt / European Patent Office / Office européen des brevets

(11) **EP 2 737 337 B1**

(12) **FASCICULE DE BREVET EUROPEEN**

(45) Date de publication et mention de la délivrance du brevet:
**11.05.2016 Bulletin 2016/19**

(21) Numéro de dépôt: **12745501.2**

(22) Date de dépôt: **12.07.2012**

(51) Int Cl.:
*G01S 13/44* *(2006.01)*   *G01S 13/48* *(2006.01)*
*H01Q 21/24* *(2006.01)*   *H01Q 21/28* *(2006.01)*

(86) Numéro de dépôt international:
**PCT/FR2012/051653**

(87) Numéro de publication internationale:
**WO 2013/017762 (07.02.2013 Gazette 2013/06)**

(54) **DISPOSITIF DE DETECTION D'UNE CIBLE RESISTANT AU FOUILLIS**

VORRICHTUNG FÜR CLUTTER-RESISTENTE ZIELERKENNUNG

DEVICE FOR CLUTTER-RESISTANT TARGET DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2011 FR 1156970**

(43) Date de publication de la demande:
**04.06.2014 Bulletin 2014/23**

(73) Titulaires:
• **Office National d'Etudes et de Recherches Aérospatiales (ONERA)**
**91120 Palaiseau (FR)**
• **Cortambert, Jean-Marc**
**83000 Toulon (FR)**

(72) Inventeurs:
• **CORTAMBERT, Jean-Marc**
**F-83000 Toulon (FR)**

• **DULOST, Jacques**
**F-84160 Cadenet (FR)**
• **MEDYNSKI, Dominique**
**F-91120 Palaiseau (FR)**
• **ROQUES, Serge**
**F-13430 Eyguieres (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
FR-A1- 2 862 439    FR-A1- 2 885 736
GB-A- 2 356 096    US-A1- 2006 290 561

**Description**

**DOMAINE TECHNIQUE**

La présente invention concerne le domaine des antennes résistantes aux fouillis. Plus particulièrement, l'invention concerne les radars ou les sonars et leurs traitements ou leurs arrangements de manière à limiter les effets perturbateurs liés au fouillis lors de la détection de signaux.

**ART ANTERIEUR**

Un radar comprend généralement une partie émettrice qui consiste en un système émetteur d'une suite d'impulsions électromagnétiques, celles-ci se propageant dans l'atmosphère jusqu'à une cible. Une seconde partie dite réceptrice permet de recevoir et d'analyser un écho de la cible. C'est-à-dire que la cible renvoie vers le récepteur radar, une petite partie de l'énergie reçue. Cette énergie arrive sur le récepteur radar qui la détecte.

Généralement, un radar ne permet pas une détection parfaite de l'écho. Notamment, une raison de cette imperfection est que le récepteur génère lui même un bruit propre, également appelé bruit thermique, qui vient parasiter les détections. Ce bruit peut soit limiter la détection de vrais échos, soit générer de fausses alarmes.

En plus de cette première limitation, il faut considérer qu'en pratique les capacités de détection d'un radar sont limitées par la présence d'échos indésirables pouvant provenir de perturbations atmosphériques, telles que la présence de nuages, de pluie ou encore de perturbations issues de réflexions parasites telles que les réflexions des ondes sur le sol ou sur la mer.

L'ensemble de ces échos perturbateurs est désigné sous le nom de fouillis, encore appelé dans la terminologie anglo-saxonne « clutter ».

En l'absence de traitement spécifique, la cible est facilement noyée dans le fouillis, par exemple le fouillis de mer. Dans ce cas aucune détection n'est possible.

Les systèmes classiques traitent le problème en implantant des traitements basés sur le filtrage Doppler. Ces traitements ont pour effet de séparer les échos reçus en fonction de leur signature en vitesse radiale.

Généralement, le fouillis a une vitesse radiale lente. Un filtre adapté permet d'éliminer les échos lents et peut détecter les autres cibles.

Un inconvénient persiste pour les radars ambigus en vitesse pour lesquels la détection des cibles lentes reste très difficile.

La demande internationale publiée sous le numéro WO 2007/002396, présente un système et une méthode permettant de détecter une cible et d'obtenir des informations sur ladite cible à partir d'une détection multicapteur. La présente demande soulève la problématique des perturbations des mesures des récepteurs induites par le fouillis. Ce document divulgue l'utilisation d'une pluralité de capteurs séparés dans l'espace et pris deux à deux pour analyser et filtrer les signaux reçus. Les capteurs sont utilisés pour éliminer ou réduire notamment les perturbations atmosphériques de manière à les prendre en compte dans les calculs de corrélation des signaux reçus. La séparation spatiale des capteurs est utilisée de manière à filtrer une grande partie du fouillis.

Cependant, cette méthode est coûteuse d'un point de vue du traitement des données puisqu'il est nécessaire de mettre eu oeuvre un filtrage spécifique des perturbations liées aux fouillis. Par ailleurs, cette méthode est dépendante du contexte d'utilisation et doit être paramétrée selon la configuration d'utilisation.

La demande de brevet publiée sous le numéro GB 2 356 096 concerne le problème technique du filtrage des multitrajet, ce qui est différent du problème technique du filtrage du fouillis, ces deux bruits étant de nature différentes.

En effet, un signal de multitrajet se caractérise par la superposition cohérente (addition en amplitude et en phase) de deux signaux provenant de la cible, c'est-à-dire le plus souvent à même distance et doppler que celle-ci. En général, l'effet d'un multi trajet est de fausser la mesure angulaire de la cible (surtout l'angle de site, mais l'azimut aussi dans certains cas). Dans le pire cas où les 2 trajets sont en opposition de phase, la cible n'est plus détectée.

En revanche, le fouillis est un signal généré par la présence de diffuseurs multiples à l'intérieur de la case de résolution distance - angle du radar ; il ne contient donc pas de signal provenant de la cible et est en général à doppler nul ou faible. Il peut donc masquer les cibles lentes et dont l'écho est de faible amplitude. Pour ces cibles, il s'apparente à un renforcement du bruit de mesure, Très souvent, le fouillis est ramené à un centre de phase fictif situé au centre de la case de résolution radar.

Le signal de multi-trajets comporte donc une information relative à la cible même si cette information est retardée, alors qu'un rayon de fouillis provient de l'environnement qui émet ou réfléchit le signal de l'émetteur et ne comporte donc pas d'information relative à la cible.

Cette différence est fondamentale, notamment pour des traitements basés sur la corrélation du signal utile avec celui du signal non utile. Dans GB 2 356 096, le signal utile est la partie la plus corrélée des signaux reçus par l'unique centre de phase avec le signal modulé émis (c'est le signal émis par l'antenne d'émission puis diffusé par la cible directement en direction de l'antenne de réception). Nous verrons, que dans l'invention, le signal utile est la partie corrélée des signaux reçus par les 2 centres de phase (c'est le signal émis par l'antenne d'émission puis diffusé par la cible puis reçu par l'antenne de réception avec ou sans multitrajet). Dans les deux cas, bien entendu, le signal non utile est le signal reçu moins le signal utile : Il comprend lel signal multi-trajets dans le document GB 2 356 096 alors que, dans l'invention, il comprend le signal de fouillis.

Par ailleurs, la solution technique proposée dans GB 2 356 096 n'est pas la même qui est proposée plus loin proposée selon l'invention.

En effet, dans le document GB 2 356 096 , à un instant donné, l'antenne d'émission n'a qu'un seul centre de phase, ce centre de phase émettant le signal puis devant être déplacé pour moduler le signal émis de manière à décorreler les signaux multi-trajets du signal utile puisque ce changement de position du centre de phase à l'émission change la relation de phase entre le signal reçu en trajet direct et les multistrajets. Le document GB 2 356 096 ne décrit pas le traitement du signal effectué après le récepteur, mais on peut dire que ce dispositif ne filtre pas le fouillis, comme le confirme l'absence de mention de ce filtrage. En effet, leur traitement ne permet pas de décorréler le fouillis du signal utile, car le signal émis par leur antenne, réfléchi autour de la cible et revenant directement sur le centre de phase, est lui aussi modulé comme le signal utile et n'a pas subi la variation de modulation provoquée par un multitrajet.

Dans l'invention, comme on le verra ci-après, il y a simultanément au moins deux centres de phase, et ceux-ci n'ont pas besoin d'être déplacés, une fois qu'ils sont positionnés à une distance adéquate l'un de l'autre. De plus, comme on le verra également ci-après, le filtrage du fouillis dans l'invention adopte une démarche opposée à celle de l'état de l'art qui consiste à rester le plus cohérent possible pour pouvoir détecter les cibles rapides.

Par ailleurs, dans GB 2 356 096, les éléments sont nécessairement des émetteurs/récepteurs puisqu'il s'agit de corréler les signaux reçus avec le signal modulé émis, alors que, dans l'invention, il n'est pas prévu de modulation du signal émis et l'antenne de réception peut donc être passive et donc discrète.

Enfin, le dispositif et le procédé de l'invention ne permettent pas de filtrer les multi-trajets.

Comme nous allons le voir, le dispositif et le procédé de l'invention sont donc clairement différents de ceux décrits dans la demande de brevet GB 2 356 096, les premiers permettant de filtrer le fouillis mais pas les multitrajet et les seconds permettant de filtrer les multi-trajets mais pas le fouillis.

## DESCRIPTION DE L'INVENTION

L'invention permet d'éviter les inconvénients cités précédemment et de diminuer efficacement les effets de fouillis, de type surfacique ou volumique, pour différentes natures de signaux reçus (électromagnétique, sonore, vibratoires, etc.).

Un premier mode de réalisation avantageux de l'invention est un dispositif de détection, passif ou actif, d'une cible apte à diffuser un signal utile pouvant provenir d'un signal source collaboratif ou non, située dans une zone observée comportant des éléments susceptibles de générer des échosde fouillis, lesdits échos de fouillis formant avec les bruits un signal non utile, ledit dispositif comprenant des moyens de réception du signal utile, le signal utile, qui est le signal source rétrodiffusé par la cible, ayant un lobe de diffusion cohérente plus large que celui du signal non utile pour une longueur d'onde observée considérée et dans la direction allant de la cible vers le barycentre des positions desdits moyens de réception, lesdits moyens de réception comprenant :

> o A un instant t donné, au moins deux portions de réception distinctes de même polarisation, chaque portion comprenant au moins un récepteur et un centre de phase ; et
> o des moyens de traitements permettant la corrélation entre au moins deux signaux construits à partir de signaux reçus à un instant t, chacun desdits signaux reçus étant reçu par un récepteur d'une desdites au moins deux portions de réception distincte,

caractérisé en ce que les centres de phase desdites au moins deux portions de réception sont disposés de manière à se situer tous les deux dans ledit lobe de diffusion cohérente du signal utile et à ne pas être situés tous les deux dans ledit lobe de diffusion cohérente du signal non utile, de sorte à permettre auxdits moyens de traitements de distinguer l'éventuel signal utile du signal non utile, la distance minimale nécessaire entre lesdits centres de phase étant celle pour observer une première chute de la corrélation desdits aux moins deux signaux construits.

Un « centre de phase » peut être défini comme le point servant de référence pour les mesures de phases sur une antenne. Ce point est calculé par la mesure des surfaces équiphases dans le lobe d'antenne. On obtient théoriquement des sphères dont le centre est ledit centre de phase. Pour un réseau « phasé », le centre de phase est proche du barycentre des positions des éléments du réseau. Il est dans tous les cas compris dans la surface délimitée par le réseau. Pour une zone de clutter observée, génératrice de fouillis, ou pour une cible, le centre de phase est le barycentre des positions des points brillants pondérées par l'amplitude de l'onde qu'ils (rétro)diffusent.

On définit un « lobe de diffusion cohérente » comme suit : les caractéristiques de l'écho produit par une onde radar venant frapper une cible quelconque s'expliquent par la naissance de courants induits circulant le plus souvent à la surface de la cible. En première approximation (optique géométrique), la cible est représentée comme un ensemble de points brillants répartis sur sa surface. Il en est de même pour la zone de clutter générant le bruit de fouillis. Ceci donne un caractère aléatoire au phénomène de rétrodiffusion. Il existe une zone spatiale de maintien du comportement statistique de l'amplitude de l'onde (notion de cohérence spatiale). En champ lointain, domaine d'application de la présente invention, la définition de cette zone, appelée dans la présente demande, lobe de diffusion cohérente, s'exprime simplement par les points situés entre 2 points d'observation séparés angulairement de moins de l/ L radians, où l est la longueur de d'onde de travail, et L la dimension caractéristique de la cible dans une direction perpendiculaire à l'axe d'observation, le sommet de l'angle étant le centre de phase de la source considérée (la zone de clutter ou la cible).

Ceci explique que la cible, de dimension caractéristique inférieure à celle de la zone de clutter, reste cohérente sur une plus large étendue angulaire que le fouillis.

Dans ce mode de réalisation, le dispositif de détection peut être actif, c'est-à-dire qu'il comprend une antenne d'émission d'un signal apte à être diffusé par toute éventuelle cible.

Le dispositif de détection peut également être passif, c'est-à-dire qu'il peut ne pas comprendre d'antenne d'émission d'un signal d'éclairement de la zone à observer. Le signal utile peut alors être la diffusion d'un signal provenant d'une autre source, comme un autre radar ou une fréquence porteuse d'un réseau de télécommunications civil, ou alors être un signal émis par la cible elle-même, comme par exemple son émission thermique.

Cette possibilité de l'invention de fonctionner en mode passif résulte du fait que les signaux reçus par lesdits moyens de réception n'ont pas besoin d'être cohérents avec un signal éclairant ladite zone observée susceptible de contenir une cible. En revanche, une condition nécessaire est que le signal utile, diffusé par la cible, soit cohérent sur lesdits au moins deux récepteurs.

Dans le cas d'un éclairement par un réseau de télécommunications civil, la zone d'éclairement peut être de très grande dimension, or la taille du lobe de diffusion cohérente, dépendant directement de la largeur de la zone d'éclairement, ce lobe peut donc être de très faible largeur, ce qui permet un filtrage du fouillis avec un écartement très faible des centres de phase.

En effet, une caractéristique importante de l'invention résulte du choix de l'écartement des centres de phases de portions de réception des moyens de réception comme cela est détaillé par la suite.

Par la suite, la description mentionne principalement deux « portions réceptrices » pour indiquer indifféremment deux sous réseaux d'une même antenne ou deux antennes distinctes de réception. Une portion réceptrice est également appelée « portion de réception » ou encore « portion de moyen de réception ».

Dans le cas linaire, on nomme ces portions indifféremment : « portion linéaire », « voie linéaire » ou « portion de ligne »

Chaque portion réceptrice des moyens de réception comporte un centre de phase.

Les deux portions distinctes des moyens de réception du dispositif de l'invention peuvent être de différentes natures. Il peut s'agir de deux antennes distinctes mais également de deux sous réseaux de récepteurs d'une même antenne.

Dans tous les modes de réalisation, il est possible d'estimer la largeur du lobe de cohérence du signal non utile et de configurer une distance suffisante séparant les centres de phases des portions de réception.

Dans le cas où des informations relatives à la géométrie de l'éventuel éclairement de la zone observée, notamment celles relatives à la position et à la géométrie d'une antenne d'émission, sont connues a priori, cette estimation est accessible à l'homme de l'art.

Dans tous les cas, il est toujours possible de faire varier les positions d'un ou de plusieurs centres de phase jusqu'à obtenir une décorrélation significative des composantes non utiles des signaux reçus par les deux récepteurs des portions de réception associées à ces centres de phase.

L'invention est particulièrement propice à l'application des radars embarqués sur des navires ou des aéronefs.

L'invention permet une amélioration de la détectabilité des cibles noyées dans le fouillis à partir de moyens indépendants de la vitesse radiale des ondes reçues. Cependant, une technique de filtrage et d'analyse de la vitesse radiale peut être combinée avec l'invention.

Un second mode de réalisation avantageux de l'invention est un dispositif de détection, selon la revendication 1, caractérisé en ce que la distance, Lr, entre les centres de phase desdites au moins deux portions de réception est supérieure à une valeur minimale, Lc, correspondant à la largeur du lobe de cohérence des signaux non utiles diffusés en direction desdites au moins deux portions de réception, la largeur du lobe de cohérence des signaux non utiles diffusés étant déterminée à partir de la dimension de la zone observée déduite de la directivité des moyens de réception..

Un troisième mode de réalisation avantageux de l'invention est un dispositif de détection selon l'un quelconque des modes de réalisation précédents, caractérisé en ce que les centres de phases desdites au moins deux portions de réception sont situés dans un plan horizontal et à la même distance du centre de la cible.

Un quatrième mode de réalisation avantageux de l'invention est un dispositif de détection, l'un quelconque des modes de réalisation précédents, caractérisé en ce qu'il comprend une antenne d'émission émettant ledit signal source collaboratif, les caractéristiques de l'antenne d'émission et dudit signal source collaboratif étant connues

Un cinquième mode de réalisation avantageux de l'invention est un dispositif de détection, le mode de réalisation précédent, caractérisé en ce que :

- l'antenne d'émission est de largeur donnée et placée approximativement à la même distance du centre de la zone observée que les portions de réception, le signal source collaboratif émis par cette antenne d'émission se réfléchissant sur la cible pour former le signal utile à détecter par les moyens de réception ;
- la distance entre les centres de phase desdites au moins deux portions de réception est supérieure ou égale à la largeur de l'antenne d'émission.

Il est précisé que l'invention fonctionne a priori avec tout type de moyens d'émission. Il peut s'agir, par exemple, d'une antenne d'émission de type parabolique, à fente ou d'une antenne comprenant des réseaux d'émetteurs.

Dans le cas particulier d'un quatrième mode de réalisation respectant également la condition d'horizontalité du troisième mode de réalisation, l'expression littérale de la condition de distance entre les centres de phase peut être exprimée de manière très simple.

Soient :

- Le la largeur physique de l'antenne d'émission,
- $\lambda$ la longueur d'onde du signal émis par l'antenne d'émission,
- $\Theta_3$ l'angle d'ouverture du lobe d'émission,
- R la distance entre l'antenne d'émission et le centre de la zone observée, qui est aussi la distance entre ce centre et les portions de réception,
- D' la largeur de la zone éclairée par l'antenne d'émission,
- Le la largeur de cohérence, au niveau des portions de réception, du lobe de diffusion cohérente de la zone observée,
- Lr la distance minimale entre les centres de phase desdites au moins deux portions de réception.

Le calcul de Lr se fait alors de la façon suivante :

$\Theta_3 = \lambda$ / Le, généralement de l'ordre du degré à quelques degrés ;

$$D' = R \cdot \Theta_3 = R \lambda / Le \ ;$$

On peut considérer que la diffusion ne reste cohérente qu'à l'intérieur d'un lobe de diffusion dont la largeur angulaire est de l'ordre de $\lambda$ / D'. Or $\lambda$ / D' = $\lambda$ Le/$\lambda$ R= Le/R.

$$Lc = R. \lambda / D' = R . Le / R = Le$$

Le dispositif de détection de l'invention permet de disposer les voies en réception de telle manière que les centres de phases de chaque voie sont situés à une distance Lr l'un de l'autre. Les signaux recueillis sur chacune des voies seront incohérents si Lr > Lc soit Lr > Le ;

En conséquence, l'invention permet de rendre incohérents les signaux diffusés par une zone observée éclairée par une antenne d'émission dès lors que les centres de phases des deux voies de réception sont écartés d'une distance supérieure à la largeur de l'antenne d'émission.

Un avantage du dispositif de l'invention est qu'il permet d'être compatible avec des antennes de réception dites « classiques ». Une adaptation de la disposition des voies de réception permet d'écarter les voies de réception de manière à ce que la distance entre les centres de phases soit supérieure à la taille de l'antenne d'émission. Les traitements des signaux reçus par les deux voies de réception peuvent être adaptés de manière à filtrer le fouillis par une configuration spécifique d'ajustement des seuils auxquels sont comparés les mesures de coefficients de corrélation.

Un autre avantage est que cette dernière adaptation est compatible avec les architectures d'antenne ainsi que les traitements classiques de filtrage et de traitement doppler.

Typiquement, le cas d'une antenne cruciforme classique peut être adapté en éloignant les deux voies de réception de telle manière que la distance entre les centres de phases soit supérieure à la taille de l'antenne d'émission.

Dans le cas général où le dispositif ne comporte pas d'antenne d'émission, la simplification par la distance à la cible R n'est plus forcément valable.

Dans ce dernier cas, il faut revenir à la condition générale qui est que les deux centres de phases soient agencés de manière :

- d'une part, à ne pas être tous les deux situés dans un lobe de cohérence des signaux de fouillis et/ou de bruit dans la bande spectrale potentielle du signal utile, provenant de la zone observée, étendue, et ;
- d'autre part, à être situé tous les deux dans un même lobe de cohérence de l'onde correspondant au signal utile à détecter.

Dans le cas où les antennes sont disposées verticalement, la distance minimale nécessaire ente les centres de phase est plus complexe à estimer :

La présence de fouillis est l'un des problèmes de la détection en milieu maritime. L'invention résout ce problème par le fait que le fouillis de mer n'est pas équivalent à une cible ponctuelle. En effet, l'antenne d'émission illumine une surface élémentaire dont la taille est déterminée par la résolution distance notée $\Delta$r sur l'axe distance et par la taille du lobe en azimut sur l'axe transversal.
La résolution distance $\Delta$r dépend de la bande du signal émis par le radar.

Dans le cas de la disposition verticale, il faut tenir compte de la directivité en site de la cellule de fouillis. Celle-ci s'exprime par la formule :

$$\phi_3 = 1 \, / \, (\Delta r \ \sin(\phi)),$$

où $\phi$ est l'angle de site (angle entre la direction d'intérêt et le plan horizontal, et $\Delta$r est la résolution distance du radar.
L'espacement minimum entre les antennes de réception alignées verticalement est alors :

$$R \, \phi_3 = \lambda \, R \, / \, (\Delta r \ \sin(\phi)).$$

On considère alors un temps d'observation pendant lequel les réceptions des signaux sont effectués sur chaque portion de réception pour être corrélés par des moyens de traitements.
Un sixième mode de réalisation avantageux de l'invention est un dispositif de détection selon l'un des deux modes de réalisation précédents, caractérisé en ce que lesdites au moins deux portions de réception sont situées de part et d'autre de l'antenne d'émission.
Un septième mode de réalisation avantageux de l'invention est un dispositif de détection selon l'un des trois modes de réalisation précédents, caractérisé en ce que lesdites au moins deux portions de réception comportent chacune un sous réseau linéaire comportant une pluralité de capteurs.
Un huitième mode de réalisation avantageux de l'invention est un dispositif de détection selon le mode de réalisation précédent, caractérisé en ce que lesdites au moins deux portions de réception sont :

- non colinéaires à l'axe d'émission de l'antenne d'émission :

  - non colinéaires à une direction caractéristique de ladite zone observée. Cette direction caractéristique pouvant être l'horizon non horizontal d'un flan de colline ou de montagne, ou encore celle de câbles électriques aériens afin d'équilibrer les signaux reçus par les deux portions d'antenne en évitant qu'une des portions reçoive un signal de très forte amplitude et l'autre un signal de très faible amplitude, ce qui serait néfaste à la réalisation de la corrélation.

Un neuvième mode de réalisation avantageux de l'invention est un dispositif de détection selon l'un des deux modes de réalisation précédents, caractérisé en ce que lesdites au moins deux portions de réception ne sont pas colinéaires entre-elles et forment une antenne cruciforme.
Un dixième mode de réalisation avantageux de l'invention est un dispositif de détection selon l'un quelconque des modes de réalisation précédents, caractérisé en ce qu'il comprend des moyens de pivotement des portions réceptrices de manière à orienter l'axe joignant les deux centres de phases selon un angle choisi.
Un onzième mode de réalisation avantageux de l'invention est un dispositif de détection selon l'un quelconque des modes de réalisation précédents, caractérisé en ce qu'il comprend des moyens de déplacement desdites au moins deux portions de réception de manière à régler sur une distance choisie la distance séparant leur centre de phase.
Un douzième mode de réalisation avantageux de l'invention est un dispositif de détection selon l'un quelconque des modes de réalisation précédents, caractérisé en ce qu'il comprend un réseau d'une pluralité de centres de phases, dont la combinaison des signaux des capteurs pris deux à deux permet d'estimer les dimensions de ladite cible dans plusieurs directions.

Un treizième mode de réalisation avantageux de l'invention est un dispositif de détection selon l'un quelconque des modes de réalisation précédents, caractérisé en ce qu'il comporte :

- un dispositif de traitement d'antenne formant, pour chacune desdites au moins deux portions, à partir des signaux de base de leurs capteurs, un ou plusieurs signaux combinés ;
- un dispositif de traitement de signal apte à filtrer le bruit des signaux combinés issus desdites portions ;
- un dispositif de calcul des coefficients de corrélation entre des signaux combinés issus desdites portions ;

- un dispositif générant un signal de détection lorsqu'un desdits coefficients de corrélation dépasse un premier seuil prédéterminé.

Un quatorzième mode de réalisation avantageux de l'invention est un dispositif de détection selon l'un quelconque des modes de réalisation précédents, caractérisé en ce que les coefficients de corrélation sont normés.

L'invention comprend également un procédé de détection.

Un premier mode de réalisation avantageux du procédé de l'invention est un Procédé de détection, passif ou actif, d'une cible apte à diffuser un signal utile pouvant provenir d'un signal source collaboratif ou non, située dans une zone observée comportant des éléments susceptibles de générer des échos de fouillis, lesdits échos de fouillis formant avec les bruits un signal non utile, ledit procédé comprenant une étape de réception du signal utile par des moyens de réception comprenant au moins deux portions de réception distinctes de même polarisation, chaque portion comprenant au moins un récepteur et un centre de phase, le signal utile, qui est le signal source rétrodiffusé par la cible, ayant un lobe de diffusion cohérente plus large que celui du signal non utile pour une longueur d'onde observée considérée et dans la direction allant de la cible vers le barycentre desdits moyens de réception, ledit procédé comprenant également une étape de traitements permettant la corrélation entre au moins deux signaux construits à partir de signaux reçus à un instant t donné, chacun desdits signaux reçus étant reçu par un récepteur d'une desdites au moins deux portions de réception distincte, caractérisé en ce qu'il comprend une étape consistant à disposer les centres de phase desdites au moins deux portions de réception de manière à ce qu'ils se situent tous les deux dans ledit lobe de diffusion cohérente du signal utile et à ce qu'ils ne se situent pas tous les deux dans ledit lobe de diffusion cohérente du signal non utile, de sorte à permettre auxdits traitements de distinguer l'éventuel signal utile du signal non utile, la distance minimale nécessaire entre lesdits centres de phase étant celle pour observer une première chute de la corrélation desdits aux moins deux signaux construits.

Un deuxième mode de réalisation avantageux du procédé de détection de l'invention est un procédé selon le mode de réalisation précédent, caractérisé en ce qu'il comprend une étape de translation et de rotation desdites au moins deux portions de réception, permettant, en l'absence d'information suffisante sur le lobe de cohérence de l'éventuel signal utile et sur le lobe de cohérence du signal non utile, de déterminer, de manière expérimentale, la distance minimale nécessaire entre lesdits centres de phase pour observer une première chute du coefficient de corrélation desdits aux moins deux signaux construits, cette première chute étant caractéristique d'une sortie d'au moins l'un desdits centres de phase du lobe de diffusion cohérente du signal non utile, ce qui permet aux moyens de traitements, en cas de présence d'une cible, de distinguer le signal utile du signal non utile.

Un troisième mode de réalisation avantageux du procédé de détection de l'invention est un procédé selon l'un quelconque des modes de réalisation précédents, caractérisé en ce qu'il comprend une étape d'émission coopérative d'un signal source, dit collaboratif, apte à être diffusé, par une cible située dans la zone observée, en direction desdits moyens de réception.

Il est connu de l'homme de l'art que, dans les différents modes de réalisation, le dispositif de détection peut comprendre :

- Une antenne, formée par au moins deux portions réceptrices qui sont, dans un mode de réalisation, deux sous réseaux. Les sous réseaux peuvent être cruciformes ou non, par exemple de simples réseaux linéaires ou surfaciques ou encore une antenne à formation de faisceaux par le calcul, connue également sous l'acronyme FFC ;
- un étage de formation de deux sous réseaux tels que des modules permettant la réalisation d'une fonction dite « monopulse », appelée radar monopulse, ou la réalisation de la formation d'une pluralité de faisceaux par le calcul ;
- des moyens de traitements des signaux reçus, notamment sur chaque sortie de sous réseau. Les traitements concernent dans un mode de réalisation : la compression d'impulsions et/ou le traitement Doppler ;
- des moyens de calcul de coefficients de corrélation entre les sorties des deux sous réseaux dans le cas d'une antenne classique ou de la pluralité de sorties des deux sous réseaux prises deux à deux par exemple dans le cas d'une antenne cruciforme ou d'une antenne linéaire à FFC.

L'invention présente l'avantage supplémentaire qu'en fonction de la probabilité d'apparition de fausses alarmes souhaitée, le dispositif de détection peut être configuré de manière à fixer un seuil de détection en présence d'une cible et en déduire la probabilité de détection de ce traitement en fonction du rapport signal sur bruit.

Il s'agit là d'un des principaux avantages de l'utilisation de deux portions réceptrices. Les deux portions permettent de mettre en oeuvre un traitement du signal visant à diminuer considérablement les signaux provenant de sources incohérentes telles que le bruit.

Le dispositif de l'invention permet un gain de performance en détection plus important pour des cibles lentes, ces dernières cibles étant en général difficilement détectées par les radars classiques (à filtre Doppler) puisque le fouillis produit également un écho de vitesse radiale lente.

Le dispositif de l'invention permet un traitement spatial d'élimination de fouillis qui peut être combiné à un traitement temporel. Le traitement spatial permet donc de rendre la détection indépendante de la vitesse des cibles et permet dans ce cas une réjection instantanée de signaux de fouillis dans une zone étendue. Un traitement spatial des signaux peut être combiné avec un traitement de type Doppler.

Le dispositif de l'invention peut également être appliqué au cas d'un radar à émetteur non cohérent et permettant cependant de détecter des cibles dans le fouillis. En effet, les radars classiques utilisent l'effet doppler pour éliminer le fouillis, ce dernier n'ayant pratiquement pas de vitesse donc de décalage doppler. Ceci implique l'utilisation d'un émetteur cohérent ou d'un dispositif particulier pour re-cohérer le signal à la réception.

Dans la mesure où le dispositif calcule le coefficient de corrélation, il est clair que le détecteur est insensible à une phase aléatoire due à l'émetteur incohérent et qui se retrouve identiquement sur chacune des voies de réception, précédemment notées voie i et voie j.

Le dispositif de l'invention est particulièrement propice à des applications dans des gammes de fréquences comprises entre 3 MHz et 110 GHz. Notamment, pour des applications radars visant généralement à déterminer la présence et la géométrie d'une cible. Ces applications peuvent être diverses selon que l'on souhaite détecter la présence d'un véhicule terrestre, d'un navire ou encore d'un aéronef.

Une bande de fréquences privilégiée est comprise entre 8 GHz et 12 GHz. Cette bande de fréquences concerne notamment les autodirecteurs de missiles, les radars de navigation, les radars de cartographie. Cette bande est avantageuse du fait que la longueur d'onde des fréquences émises, de l'ordre de quelques centimètres, permet une meilleure disposition des portions réceptrices des antennes en réception. Typiquement, pour une ouverture de l'antenne en émission de $\Theta_3 = 1°$, soit environ 1/60 rad, on a une largeur d'antenne d'émission approximative de l'ordre du mètre. Cette configuration permet par exemple sur des navires ou des aéronefs de mettre une portion d'antenne espacée de quelques mètres. Par exemple sur un avion, une portion réceptrice peut être installée sur chacune des ailes.

Le dispositif de l'invention n'est cependant pas adapté à des longueurs d'ondes inférieures au dixième de millimètre. En dessous de $10^{-2}$ mm, le dispositif de détection de cible de l'invention ne serait pas adapté. De nombreuses modifications seraient en effet à envisager, notamment sur la disposition des capteurs en réception, le type des capteurs et leur agencement. Dans ce dernier cas, la taille de l'antenne d'émission serait trop petite pour permettre une adaptation des deux voies de réception permettant, d'une part, d'obtenir deux voies de réception distinctes en vue de calculer des coefficients de corrélation entre les signaux reçus sur chaque voie et d'autre part, de rendre les sources de fouillis incohérentes.

L'invention, selon l'un quelconque des modes de réalisation précédent, présente l'avantage supplémentaire d'être facilement adaptable aux radar de détection de cible existants et donc de permettre une diminution des coûts de maintenance évolutive. En effet, une opération de reconfiguration des portions réceptrices selon l'invention est suffisante pour améliorer le filtrage des perturbations issues du fouillis.

L'invention pourra être mieux comprise avec les figures et la description détaillé d'un exemple de réalisation..

FIGURES

- figure 1 : un schéma de principe d'une antenne cruciforme de l'art antérieur ;

- figure 2 : un schéma de principe d'une antenne classique de l'art antérieur ;

- figure 3 : un schéma de principe d'une antenne à FFC de l'invention;

- figure 4 : un schéma de principe d'une antenne de l'invention résistante aux fouillis de diffusion ;

- figure 5 : un schéma de principe d'un exemple d'antenne de l'invention.

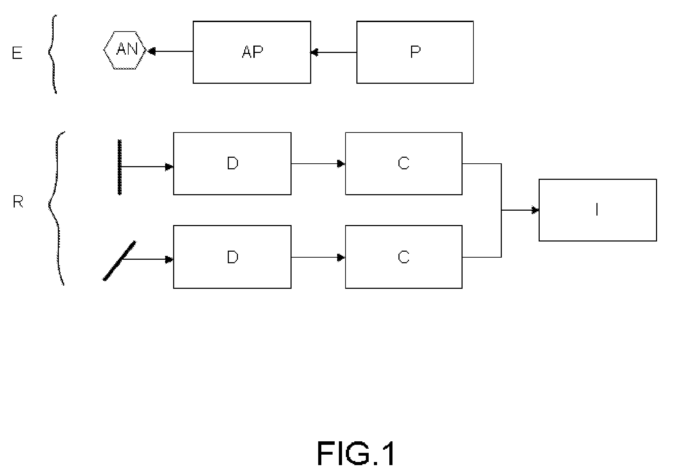

La figure 1 représente un schéma de principe d'un radar 3D à antenne cruciforme permettant d'analyser les données de distances de la cible et de position dans l'espace par la mesure du gisement et du site. Dans le cas d'un radar de la figure 1, l'émission est réalisée par une antenne séparée de(s) voie(s) de réception, les deux voies de réception constituant les deux portions réceptrices.

La voie d'émission E du radar de la figure 1 comprend une antenne d'émission, notée AN, un composant d'amplification de puissance, noté AP, et un composant de pilotage de l'émission selon la configuration employée pour le radar, notée P.

En outre, le radar comprend des moyens de réception R comprenant une antenne de réception, dite cruciforme, comprenant deux voies de réception. Chacune des voies de réception comprend une antenne, notée première et seconde antenne. Les deux antennes du dispositif de l'invention sont disposées de manière à ce qu'elle ne soient pas parallèles. Dans l'exemple de réalisation de la figure 1, la première antenne forme un angle de 90° avec la seconde antenne. Dans ce mode de réalisation, les deux antennes sont perpendiculaires entre elles. Par exemple, une première antenne peut être disposée horizontalement et la seconde verticalement.

Les deux antennes en réception sont formées par deux sous réseaux linaires qui correspondent chacun à une portion réceptrice.

Chaque voie de réception comprend un composant permettant le traitement des signaux reçus, notamment :

- des moyens de filtrage passe-bande ;
- des moyens de filtrage Doppler ou MTI, dont l'acronyme signifie dans la terminologie anglo-saxonne « Moving Target Indicator », noté D sur la figure 1 ;
- des moyens de traitements de compression d'impulsions, noté C, et/ou encore ;
- des moyens de traitements et de calculs, notés I, permettant de corréler les signaux pris deux à deux sur chacune des voies de réception ;
- des moyens permettant d'effectuer des mesures d'écartométrie et/ou ;
- tout autre traitement permettant d'améliorer les fonctionnalités, les performances ou la robustesse de l'antenne et du traitement de données associé.

L'invention permet de configurer le dispositif de détection de cibles de manière à obtenir une distance séparant les centres de phases de chacun des deux sous-réseaux linéaires utilisés en réception supérieure à la largeur de l'antenne d'émission.

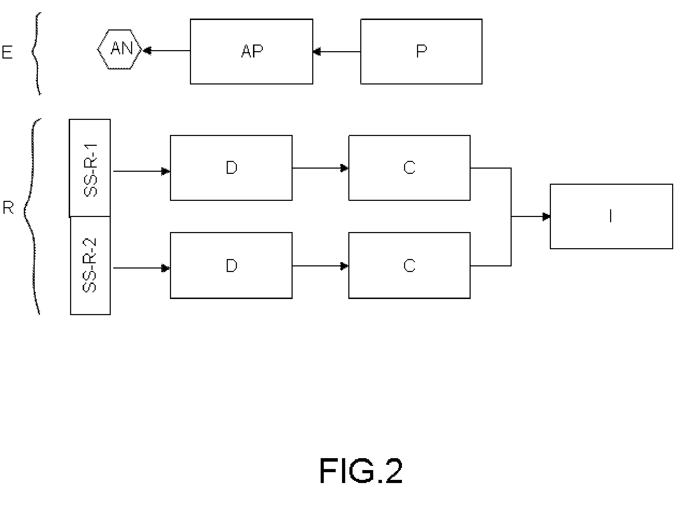

La figure 2 représente une antenne classique 2D linéaire permettant la mesure du gisement et la distance d'une cible à partir de deux sous-réseaux notés SS-R-1 et SS-R-2 comprenant chacun une pluralité de capteurs.

Dans une variante de réalisation, l'antenne d'émission AN peut utiliser la partie centrale du radar. Les deux portions réceptrices sont alors situées de part et d'autre de l'antenne d'émission.

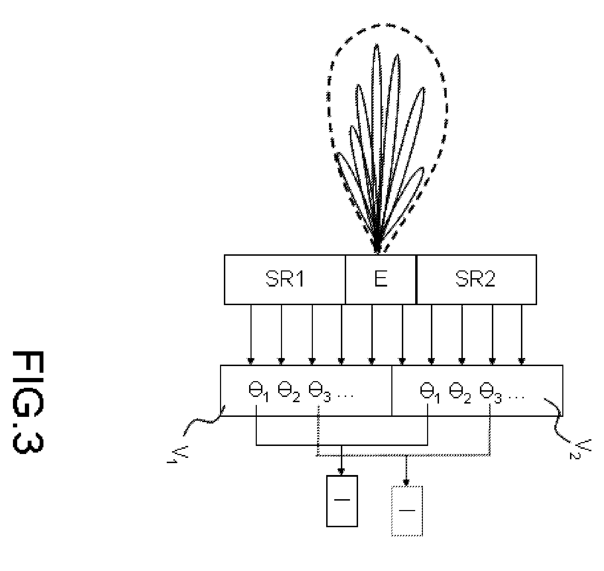

La figure 3 représente le cas d'une antenne à FFC qui permet d'obtenir des lobes d'émission, dont un lobe est représenté en trait pointillé, plus larges que les lobes des antennes linéaires 2D ou 3D, représentés en trait plein. Comme dans le cas d'une antenne cruciforme, il y a plusieurs couples de sorties sur les deux voies de réception. L'association des sorties deux à deux permet de déterminer les différentes directions scrutées en réception à l'intérieur du lobe d'émission. Les moyens de traitement et de filtrage Doppler ne sont pas représentés sur la figure 3.

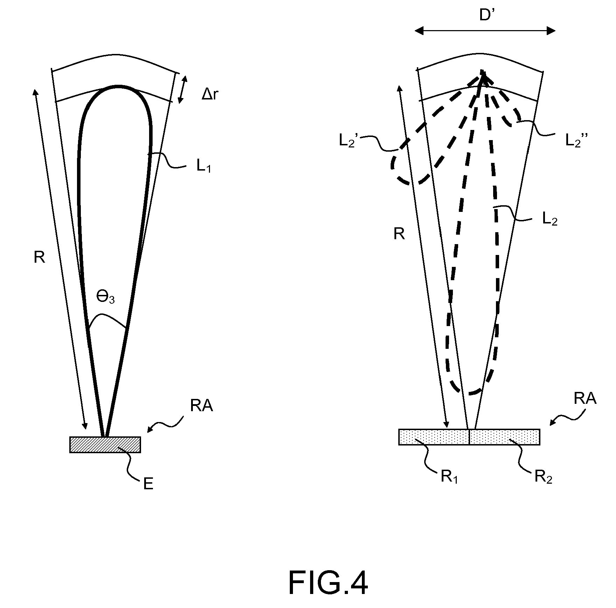

La figure 4 représente à gauche un radar noté RA comportant une antenne en émission, notée E, ayant un lobe d'émission $L_1$ dont les caractéristiques sont définies par la taille du lobe d'émission, notée $6_3$. Lorsque le signal émis par l'antenne de réception intercepte à une distance R une cellule élémentaire de fouillis de mer, la taille de la cellule est définie, selon l'axe distance, par la résolution distance $\Delta r$ du radar et, selon l'axe transverse, par une largeur D'. La largeur D' de la cellule est sensiblement égale au produit de la taille du lobe, qui est défini par son angle d'ouverture $\Theta_3$, et de la distance R d'éclairage.

La figure 4 de droite représente une pluralité de lobes de diffusion dont trois lobes sont représentés sur la figure 4 : $L_2$, $L_2'$ et $L_2''$. Le radar RA comprend deux voies de réception notées $R_1$ et $R_2$ dont les centres de phases sont séparés d'une distance notée Lr.

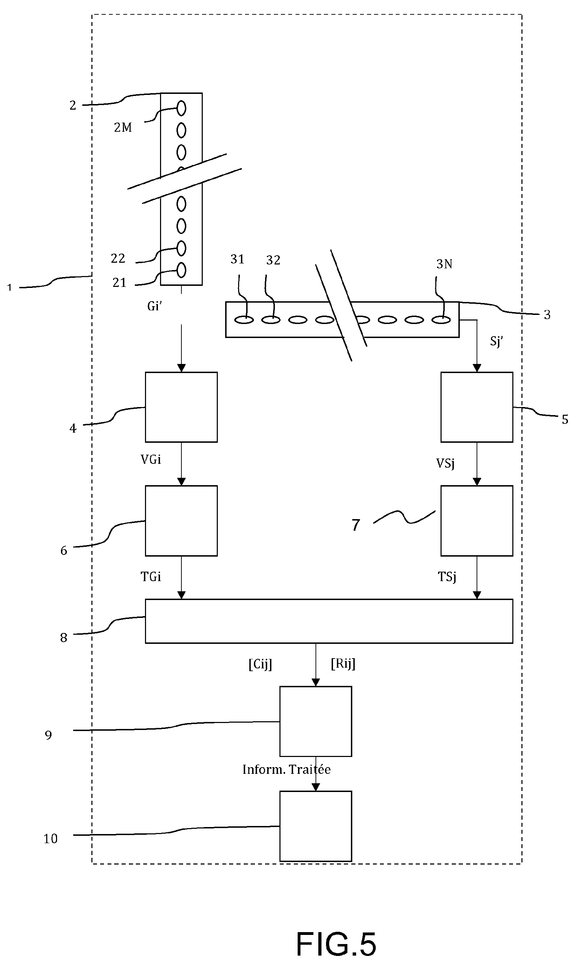

La figure 5 représente est un exemple simplifié d'antenne. L'antenne 1 comprend deux sous-antennes 2 et 3. Les sous-antennes 2 et 3 comprennent chacune plusieurs capteurs, respectivement 21 à 2M et 31 à 3N. Les capteurs 21 à 2M sont agencés pour sensiblement former une première portion de ligne, c'est-à-dire une première voie linéaire. Les capteurs 31 à 3N sont agencés pour sensiblement former une deuxième portion de ligne, une deuxième voie linéaire.

Les première et deuxième portions de lignes de la figure 5 peuvent former un angle compris dans la bande [0° ;180°] ou une bande plus restreinte de [20° ;160°] de manière à éviter que les deux portions soient sensiblement colinéaires entre elles. Les capteurs 21 à 2M sont en l'occurrence utilisés pour la détermination du site d'une source ou d'une cible, tandis que les capteurs 31 à 3N sont utilisés pour déterminer son gisement.

Ces capteurs comprennent un ou plusieurs capteurs élémentaires non illustrés, du type adéquat. Un capteur présentant plusieurs capteurs élémentaires génère un signal de base à partir des signaux des capteurs élémentaires de façon connue en soi. Chaque capteur génère donc un signal de base qui peut subir un traitement de signal particulier avant le traitement d'antenne. Les capteurs d'une portion peuvent présenter une directivité identique et être équirépartis sur cette portion. Les capteurs 21 à 2M génèrent respectivement les signaux de base G1 à GM illustrés par Gi'. Les capteurs 31 à 3N génèrent respectivement les signaux de base S1 à SN illustrés par Sj'. Par la suite, l'indice i' désignera tous les signaux ou nombres associés à un capteur 2i'. Ainsi le signal G4 est associé au capteur 24. De façon similaire, l'indice j' désignera tous les signaux ou nombres associés à un capteur 3j'. Ainsi, le signal S2 est associé au capteur 32.

Un dispositif de traitement d'antenne 4 forme un signal combiné des capteurs d'une portion, de façon connue en soi. Le dispositif de traitement d'antenne 4 génère ainsi les signaux combinés VGi associés aux signaux Gi'. Un dispositif de traitement d'antenne 5 forme un signal combiné des capteurs de l'autre portion, de façon connue en soi. Le dispositif de traitement d'antenne 5 génère ainsi les signaux combinés VSj associés aux signaux Sj'. Les signaux combinés visent, entre autres, à former des lobes de directivité de l'antenne utilisée en réception.

Chacune des sous-antennes présente un dispositif de traitement de signal traitant des signaux provenant du traitement d'antenne. Ce dispositif de traitement de signal fournit un ou plusieurs signaux combinés à la sortie de chaque sous-antenne.

Les dispositifs de traitement de signal 6 et 7 séparent le signal utile du bruit, de façon connue en soi. Les dispositifs 6 et 7 traitent ainsi respectivement les signaux combinés VGi et VSj pour générer les signaux combinés TGi et TSj. Les dispositifs de traitement de signal 6 et 7 peuvent aussi être accouplés au dispositif d'émission de l'antenne si elle est du type émettrice/réceptrice ou d'une autre antenne si l'antenne est du type réceptrice seulement, afin d'effectuer un traitement tenant compte des signaux émis de façon connue en soi, comme la compression d'impulsion.

Le dispositif de calcul 8 calcule les coefficients de corrélation temporelle ou fréquentielle (selon que les traitements ont été effectués dans le domaine temporel ou fréquentiel) entre les signaux combinés TGi de la première portion et les signaux combinés TSj de la deuxième portion. On forme ainsi la matrice [Cij] des coefficients de corrélation. Des détails concernant le calcul de ces coefficients sont donnés par la suite. Le dispositif de calcul 8 exploite les coefficients de corrélation [Cij] afin de détecter une cible et générer un signal de détection. Un fonctionnement possible est le suivant : un dispositif de détection (inclus dans le dispositif de calcul 8 dans l'exemple) compare chaque coefficient de corrélation à un seuil respectif prédéfini. Lorsqu'un coefficient de corrélation donné est en dessous de son seuil prédéfini, on considère qu'aucune source ou cible ne se trouve à l'intersection des deux lobes de directivité VGi et VSj.

Lorsqu'un coefficient de corrélation dépasse son seuil prédéfini, on considère au contraire qu'une source ou cible se trouve à l'intersection des deux lobes de directivité. Un signal de détection associé au résultat de la comparaison peut ainsi être généré sous forme de valeur binaire. L'ensemble des signaux peut alors être agencé dans une matrice [Rij]. Le seuil est défini en fonction des performances souhaitées de l'antenne et du dispositif de traitement de données associé (incluant le traitement d'antenne, le traitement de signal et le traitement d'information), en terme de probabilité de détection et de fausse alarme.

Dans le cas des traitements d'antennes connus par l'homme de métier, si l'antenne de la figure 5 est du type émission/réception, le diagramme de directivité à l'émission de l'antenne est celui d'un lobe en forme de croix et par réciprocité le diagramme de directivité à la réception est le même qu'à l'émission. Avec la structure d'antenne présentée, l'association des traitements d'antenne et de signal permet d'obtenir les mêmes informations que celles obtenues par une antenne plane dont le lobe de directivité en réception serait aussi fin que le centre de la croix formée par le lobe de directivité. De plus, toujours dans le cas des traitements d'antennes connus par l'homme de métier, si l'antenne de la figure 5 n'effectue pas de traitement de corrélation entre les signaux provenant des sous-antennes, les performances de détection sont celles des sous-antennes seules. Ces performances sont nettement inférieures à celles obtenues par l'antenne de l'invention.

Le dispositif de traitement 9 peut effectuer des étapes supplémentaires de traitement d'information, pour améliorer par exemple les performances de probabilité de fausse alarme ou pour déterminer la vitesse, la distance d'une cible ou toutes autres informations utiles. Le dispositif de traitement 9 vise ainsi à rendre les informations exploitables par un opérateur ou un dispositif de traitement. Ce dispositif 9 reçoit en entrée des données telles que la matrice [Cij], la matrice [Rij] ou toutes données similaires.

L'ensemble des informations déterminées peut être restitué aux utilisateurs par un dispositif d'affichage 10 adéquat, connu en soi.

Détaillons maintenant un exemple de calcul de coefficient de corrélation temporelle à partir de l'exemple de réalisation représenté sur la figure 5.

Pour réaliser le calcul du coefficient de corrélation temporelle de signaux vidéo complexes (par exemple TGi et TSj dans l'exemple de la figure 5), particulièrement adaptée à une application radar, on peut calculer les coefficients de [Cij] de la façon suivante:

Soient X(t) et Y(t) des signaux aléatoires complexes, non périodiques, centrés et stationnaires du deuxième ordre. On définit la fonction de corrélation des deux signaux comme l'espérance mathématique du produit de X(t) par le complexe conjugué de Y(t-T), T étant le décalage temporel entre les deux signaux.

$$corrélation_{XY}(\tau) = E\big[X(t)Y*(t-\tau)\big] = \int_{\Omega} X(t,\omega)Y*(t-\tau,\omega)dP(\omega)$$

Dans le cas de signaux ergodiques, la fonction de corrélation vérifie l'égalité suivante :

$$corrélation_{XY}(\tau) = \lim_{T\to\infty} \frac{1}{2T} \int_{-T}^{+T} X(t)Y*(t-\tau)dt$$

Dans la pratique l'intégrale se calcule sur un intervalle de temps fini qui correspond à la durée d'intégration.

L'homme de métier saura adapter les formules aux cas des signaux périodiques, non centrés ou ne vérifiant pas toutes les propriétés statistiques citées auparavant.

On définit la fonction de corrélation normée entre les des deux signaux :

$$C_{XY}(\tau) = \frac{corrélation_{XY}(\tau)}{\sqrt{corrélation_{XX}(0)}\ \sqrt{corrélation_{YY}(0)}}$$

L'utilisation de coefficients de corrélation normés permet de réaliser une détection de cible sans se soucier des différences de niveaux entre X et Y.

Du fait que la fonction de corrélation tend vers zéro lorsque T tend vers l'infini, on considère dans la pratique que le décalage temporel T est borné. Par exemple, si T est compris dans l'intervalle de temps [-T max , T max], alors il existe une valeur $T_0$ de T pour laquelle la fonction de corrélation normée atteint son maximum $C_{XY}$, coefficient de corrélation maximum entre les deux sous-antennes.

$$C_{XY} = \big|C_{XY}(\tau = \tau_0)\big| = \max_{[-\tau_{max},\tau_{max}]}\big[\!\big|C_{XY}(\tau)\big|\!\big]$$

Le décalage temporel $T_0$ est déterminé par la géométrie de l'antenne. Dans le cas de deux sous-antennes identiques sécantes en leur centre, la maximum $C_{XY}$ est atteint pour $T_0$=0.

Les coefficients de corrélation maximum Cij sont obtenus en remplaçant les signaux aléatoires X(t) et Y(t) par les signaux combinés utiles vidéo complexes tels que définis auparavant TGi et TSj. Les coefficients de corrélation Cij forment donc une matrice [Cij], dont les valeurs sont comprises entre 0 et 1.

Une valeur de coefficient de corrélation maximum Cij supérieure à un seuil de corrélation prédéfini implique qu'au moins une source ou une cible est détectée à l'intersection virtuelle des lobes de directivités des deux sous-antennes 2i et 3j. Dans le cas de la figure 5, on détermine la présence d'une source ou cible à l'intersection du site i et du gisement j.

Une autre méthode de calcul, basée sur l'exploitation de signaux combinés réels, permet de simplifier l'étape de calcul. Les coefficients de corrélation sont alors déterminés de la façon suivante :

$$corrélation_{X,Y}(\tau) = \frac{1}{2}\Big(E\big[|X(t)+Y(t-\tau)|^2\big] - E\big[|X(t)|^2\big] - E\big[|Y(t)|^2\big]\Big)$$

Ou encore

$$corrélation_{X,Y}(\tau) = \frac{1}{4}\Big(E\big[|X(t)+Y(t-\tau)|^2\big] - E\big[|X(t)-Y(t-\tau)|^2\big]\Big)$$

Cette méthode permet d'obtenir les coefficients de corrélation directement à partir des puissances des signaux en effectuant simplement des sommations ou des soustractions.

Par ailleurs, on peut envisager d'exclure des signaux trop faibles de la détection. Ainsi, on peut au préalable calculer le dénominateur du coefficient de corrélation mentionné ci-dessous, et le comparer à un seuil minimal. Lorsque ce dénominateur est inférieur au seuil minimal, le coefficient de corrélation correspondant n'est pas pris en compte pour la détection, ce qui revient à lui donner une valeur nulle. On peut ainsi réduire de façon importante la durée d'intégration nécessaire pour des performances similaires. En variante, on peut également comparer chaque seuil du dénominateur à un seuil respectif.

Pour garantir un résultat optimal, il est souhaitable que l'acquisition des signaux utilisés pour le calcul de corrélation soit synchrone.

Bien qu'on ait décrit une solution de calcul de corrélation dans le domaine temporel, on peut également envisager d'effectuer les calculs des coefficients de corrélation dans le domaine fréquentiel, par exemple pour une application de l'antenne à un sonar. Les coefficients de corrélation dans le domaine fréquentiel peuvent être déterminés à partir de la fonction de cohérence définie de la façon suivante.

Les transformées de Fourier des fonctions de corrélation de deux signaux X et Y précédemment définies sont les densités inter-spectrales (ou encore densité spectrale d'interaction).

$$\text{Transformée de Fourier (corrélation}_{XY})(f) = S_{XY}(f)$$

De même, les transformées de Fourier des fonctions de corrélation des signaux X et Y précédemment définies sont les densités spectrales de puissance des signaux X et Y.

$$\text{Transformée de Fourier(corrélation}_{XX})(f) = S_{XX}(f)$$

$$\text{Transformée de Fourier(corrélation}_{YY})(f) = S_{YY}(f)$$

La fonction de cohérence de entre X et Y est définie par

$$c_{XY}(f) = cohérence_{XY}(f) = \frac{S_{XY}(f)}{\sqrt{S_{XX}(f)}\sqrt{S_{YY}(f)}}$$

Le calcul des coefficients de cohérence se généralise pour toutes bandes de fréquences d'analyse Bf. Dans ce cas le calcul de la fonction de cohérence devient

$$c_{XY}(f) = cohérence_{XY}(B_f) = \frac{\int_{B_f} S_{XY}(f)\,df}{\sqrt{\int_{B_f} S_{XX}(f)\,df}\sqrt{\int_{B_f} S_{YY}(f)\,df}}$$

On peut prévoir que les dispositifs de traitement d'antenne 4 et 5 pondèrent les signaux de base des capteurs en fonction de différences de directivité ou de sensibilité, avant de réaliser la combinaison (par exemple linéaire) de ces signaux.

Les dispositifs de traitement d'antenne peuvent également comprendre un traitement adaptatif qui a pour fonction d'éliminer un signal parasite, comme celui provenant d'un brouilleur ou tout autre traitement qui permettent d'améliorer les fonctionnalités et les performances de l'antenne et du traitement de données associé.

Les dispositifs de traitement de signal 6 et 7 des signaux combinés peuvent réaliser: des filtrages passe-bande, des filtrages Doppler ou MTI, des traitements de compression d'impulsion ou des mesures d'écartométrie ou tout autre traitement qui permettent d'améliorer les fonctionnalités et les performances de l'antenne et du traitement de données associé.

Bien que cela n'ait pas été représenté, l'antenne peut inclure des étages de traitement de données adéquats, fournissant des informations appropriées aux opérateurs. De façon générale, le calcul des coefficients de corrélation sera effectué de préférence après une étape de traitement d'antenne et une étape de traitement du signal. Le calcul des coefficients de corrélation sera généralement suivi d'une étape de seuillage et de traitement d'information.

Les étages de traitement d'information, correspondant aux dispositifs 8 à 10 sur la figure 5, ont par exemple pour fonction de détecter, localiser ou afficher la présence d'une source ou d'une cible.

Dans le cas des signaux discrets, le calcul des coefficients de corrélation peut être effectué sur un nombre N d'échantillons des signaux combinés utiles. L'homme de métier déterminera le nombre d'échantillons nécessaire en fonction des probabilités souhaitées de détection et de fausse alarme.

Par exemple dans le domaine temporel, on considère N échantillons temporels des signaux complexes X et Y et on fait l'hypothèse que le maximum $C_{XY}$ est atteint pour $T_0 = 0$.

$$C_{XY} = \frac{\left| \sum_{t=1}^{N} X(t).Y^*(t) \right|}{\sqrt{\sum_{t=1}^{N} |X(t)|^2} \cdot \sqrt{\sum_{t=1}^{N} |Y(t)|^2}}$$

EXEMPLE DETAILLE

Dans cet exemple, l'invention comprend :

- une antenne d'émission ;
- une première antenne de réception disposée verticalement ;
- une seconde antenne de réception, dont la polarisation est identique à la première antenne de réception, disposée horizontalement ;

La taille de l'antenne d'émission est la largeur physiquement mesurée sur l'antenne elle-même parallèlement au plan horizontal. Selon le type d'antenne, elle correspond :

- au diamètre de la parabole pour une antenne parabolique ;
- à la largeur de la fente pour une antenne à fente unique,
- à la taille horizontale du réseau pour une antenne de réception comprenant un réseau de capteurs.

Les centres de phases des deux antennes de réception sont espacés d'une distance supérieure à la corrélation spatiale du signal utile (signal émis par l'antenne d'émission puis diffusé par la cible). Dans le cas présent, où l'on dispose les antennes de réception et d'émission horizontalement et à équidistance du centre de la zone observée, la distance de corrélation en gisement est de l'ordre de la dimension horizontale de l'antenne d'émission.

Le dispositif de détection de l'invention peut se combiner aux moyens de traitements des signaux détaillés dans la demande de brevet internationale WO 05/050786 publiée le 02/06/2005.

A partir du signal reçu sur les deux portions d'antenne distinctes séparées physiquement, le traitement de l'analyse de la localisation découle alors du traitement de détection décrit dans la demande de brevet WO 05/050786 publiée le 02/06/2005 dans lequel des coefficients de corrélation $c_{ij}$ sont calculées avec la relation suivante :

$$c_{ij} = \frac{\left| \sum_{t=1}^{N} x_i(t).x_j(t) \right|}{\sqrt{\sum_{t=1}^{N} |x_i(t)|^2} \cdot \sqrt{\sum_{t=1}^{N} |x_j(t)|^2}}$$

Où xi(t) et xj(t) représentent respectivement le signal en sortie de la voie n° i, formée à l'aide de la première portion réceptrice dans le gisement i, et le signal en sortie de la voie n° j, formée à l'aide de la seconde portion réceptrice dans le site j, à un instant t.

Le coefficient $c_{ij}$, provoquant un dépassement de seuil, indique la présence d'une cible au gisement i et au site j.

Dans le cas des antennes en réception comportant deux voies linéaires, les coefficients sont calculés sur les deux sous-réseaux visant le même gisement tel que représenté par exemple sur la figure 3.

Les lobes principaux des deux voies de réception sont donc toujours conçus pour s'intercepter physiquement dans l'espace, autour de la zone observée.

Le coefficient de corrélation $C_{ij}$ est estimé sur N échantillons de signal.

Un exemple de calcul des coefficients de corrélation est détaillé à la fin de la description.

Les valeurs des coefficients de corrélation des bruits thermiques de portions réceptrices distinctes tendent asymptotiquement vers la valeur 0 du fait de la décorrélation des bruits thermiques sur les deux antennes de mesure.

Comme on l'a vu plus haut, en fonction de la probabilité souhaitée d'apparition de fausses alarmes, le dispositif de détection de l'invention peut être configuré de manière à fixer un seuil de détection de la présence d'une cible et la probabilité de détection en fonction du rapport signal sur bruit.

Il s'agit là, rappelons-le, de l'un des principaux avantages de l'utilisation de deux portions réceptrices. Les deux portions permettent de mettre en oeuvre un traitement du signal visant à diminuer considérablement les signaux provenant de sources incohérentes telles que le bruit.

Le dispositif de détection de l'invention selon le mode de réalisation de cet exemple permet de décorréler des signaux de fouillis d'une voie à l'autre en réception, simplement en espaçant les centres de phase d'une distance supérieure à la largeur de l'antenne d'émission.

Le fouillis peut alors être filtré, comme le bruit thermique, par le calcul de coefficients de corrélation des signaux provenant des voies de réception desdits deux sous réseaux.

Sur une surface telle que la mer, on considère, pour mesurer les effets de fouillis un facteur dit de « pouvoir réflecteur » d'une zone susceptible de générer du fouillis. Le pouvoir réflecteur se définit par la capacité à réfléchir des ondes radar par unité de surface.

La puissance recueillie au niveau du récepteur radar se calcule en multipliant le pouvoir réflecteur du fouillis par la surface du fouillis interceptée par le lobe radar. Cette surface peut être en l'occurrence très importante selon la taille du lobe d'émission radar.

Selon le présent exemple, considèrons un radar dont la largeur de l'antenne d'émission est de 34 cm et dont la longueur d'onde en émission est de $\lambda$ = 3 cm, le lobe d'émission à alors un angle d'ouverture $\Theta_3$ de 0,0882 rad, soit 5°. La largeur D' de la zone éclairée depuis une distance R = 10 km est donc de D' = R $\theta3$ = 882 m. La largeur du lobe de diffusion cohérente de cette zone éclairée vers des antennes de réception est $\lambda$ / D' = $3,4.10^{-5}$ rad, soit environ 0,0019°, d'où une distance de cohérence Lc à une distance R où sont placées les portions de réception de Lc = $\lambda$ / D' . R = 34 cm = Le. Il suffira donc que la distance Lr entre les centres de phases des deux voies de réception soient espacés d'une distance supérieure à Lc= Le = 34 cm pour que les signaux de fouillis captés soient incohérents et donc filtrables par un simple traitement de corrélation entre eux.

Le dispositif de l'invention comprend un calculateur permettant de calculer les coefficients de corrélation entre eux des signaux reçus par les capteurs des portions de réception. Les valeurs de seuils des coefficients de corrélation sont généralement choisies en fonction de la probabilité de fausse alarme acceptée ou en fonction de la probabilité de non détection acceptée.

En cas de présence de fouillis, le dispositif de détection de cible permet les calculs de corrélation spatiale du signal issu de la zone illuminée par l'émission ainsi que l'analyse des calculs effectués. En cas de corrélation spatiale totale ou partielle du signal reçu de la cible, les conditions de décorrélation du signal non utile reçu par au moins deux portions de réception étant réunies, il y aura une détection. Il n'y aura pas détection dans le cas contraire.

Le dispositif de détection de cible de l'invention améliore les détections de cibles en environnement de fouillis étendu, notamment pour des applications de radar ou de sonar.

## Revendications

**1.** Dispositif de détection, passif ou actif, d'une cible apte à diffuser un signal utile pouvant provenir d'un signal source collaboratif ou non, située dans une zone observée comportant des éléments susceptibles de générer des échos de fouillis, lesdits échos de fouillis formant avec les bruits un signal non utile, ledit dispositif comprenant des moyens de réception du signal utile, le signal utile, qui est le signal source rétrodiffusé par la cible, ayant un lobe de diffusion cohérente plus large que celui du signal non utile pour une longueur d'onde observée considérée et dans la direction allant de la cible vers le barycentre des positions desdits moyens de réception, lesdits moyens de réception comprenant :

o A un instant t donné, au moins deux portions de réception distinctes de même polarisation, chaque portion comprenant au moins un récepteur et un centre de phase ; et
o des moyens de traitements permettant la corrélation entre au moins deux signaux construits à partir de signaux reçus audit instant t, chacun desdits signaux reçus étant reçu par un récepteur d'une desdites au moins deux portions de réception distincte,

**caractérisé en ce que** les centres de phase desdites au moins deux portions de réception sont disposés de manière à se situer tous les deux dans ledit lobe de diffusion cohérente du signal utile et à ne pas être situés tous les deux dans ledit lobe de diffusion cohérente du signal non utile, de sorte à permettre auxdits moyens de traitements de distinguer l'éventuel signal utile du signal non utile, la distance minimale nécessaire entre lesdits centres de phase étant celle pour observer une première chute de la corrélation desdits aux moins deux signaux construits.

2. Dispositif de détection, selon la revendication 1, **caractérisé en ce que** la distance (Lr) entre les centres de phase desdites au moins deux portions de réception est supérieure à une valeur minimale (Lc), correspondant à la largeur du lobe de cohérence des signaux non utiles diffusés en direction desdites au moins deux portions de réception, la largeur du lobe de cohérence des signaux non utiles diffusés étant déterminée à partir de la dimension de la zone observée déduite de la directivité des moyens de réception.

3. Dispositif de détection selon l'une quelconque des revendications précédentes, **caractérisé en ce que** les centres de phases desdites au moins deux portions de réception sont situés dans un plan horizontal et à la même distance du centre de la cible.

4. Dispositif de détection, selon l'une quelconque des revendications précédentes, **caractérisé en ce qu'**il comprend une antenne d'émission émettant ledit signal source collaboratif, les caractéristiques de l'antenne d'émission et dudit signal source collaboratif étant connues.

5. Dispositif de détection, selon la revendication précédente, **caractérisé en ce que** :

   - l'antenne d'émission est de largeur donnée et placée approximativement à la même distance du centre de la zone observée que les portions de réception, le signal source collaboratif émis par cette antenne d'émission se réfléchissant sur la cible pour former le signal utile à détecter par les moyens de réception ;
   - la distance entre les centres de phase desdites au moins deux portions de réception est supérieure ou égale à la largeur de l'antenne d'émission.

6. Dispositif de détection selon l'une quelconque des revendications 4 à 5, **caractérisé en ce que** lesdites au moins deux portions de réception sont situées de part et d'autre de l'antenne d'émission.

7. Dispositif de détection selon l'une quelconque des revendications 4 à 6, **caractérisé en ce que** lesdites au moins deux portions de réception comportent chacune un sous réseau linéaire comportant une pluralité de capteurs.

8. Dispositif de détection selon la revendication précédente, **caractérisé en ce que** lesdites au moins deux portions de réception sont :

   - non colinéaires à l'axe d'émission de l'antenne d'émission :

      - non colinéaires à une direction caractéristique de ladite zone observée, ladite direction caractéristique pouvant être par exemple l'horizon non horizontal d'un flan de colline ou de montage, ou encore celle de câbles électriques aériens afin d'équilibrer les signaux reçus par les deux portions d'antenne en évitant qu'une des portions reçoive un signal de très forte amplitude et l'autre un signal de très faible amplitude, ce qui serait néfaste à la réalisation de la corrélation.

9. Dispositif de détection selon l'une quelconque des revendications 7 à 8, **caractérisé en ce que** lesdites au moins deux portions de réception ne sont pas colinéaires entre-elles et forment une antenne cruciforme.

10. Dispositif de détection selon l'une quelconque des revendications précédentes, **caractérisé en ce qu'**il comprend des moyens de pivotement des portions réceptrices de manière à orienter l'axe joignant les deux centres de phases selon un angle choisi.

11. Dispositif de détection selon l'une quelconque des revendications précédentes, **caractérisé en ce qu'**il comprend des moyens de déplacement desdites au moins deux portions de réception de manière à régler sur une distance choisie la distance séparant leur centre de phase.

12. Dispositif de détection selon l'une quelconque des revendications précédentes, **caractérisé en ce qu'**il comprend un réseau d'une pluralité de centres de phases, dont la combinaison des signaux des capteurs pris deux à deux permet d'estimer les dimensions de ladite cible dans plusieurs directions.

13. Dispositif de détection selon l'une quelconque des revendications précédentes, **caractérisé en ce qu'**il comporte :

- un dispositif de traitement d'antenne formant, pour chacune desdites au moins deux portions, à partir des signaux de base de leurs capteurs, un ou plusieurs signaux combinés ;
- un dispositif de traitement de signal apte à filtrer le bruit des signaux combinés issus desdites portions ;
- un dispositif de calcul des coefficients de corrélation entre des signaux combinés issus desdites portions ;
- un dispositif générant un signal de détection lorsqu'un desdits coefficients de corrélation dépasse un premier seuil prédéterminé.

14. Dispositif de détection selon l'une quelconque des revendications précédentes, **caractérisé en ce que** les coefficients de corrélation sont normés.

15. Procédé de détection, passif ou actif, d'une cible apte à diffuser un signal utile pouvant provenir d'un signal source collaboratif ou non, située dans une zone observée comportant des éléments susceptibles de générer des échos de fouillis, lesdits échos de fouillis formant avec les bruits un signal non utile, ledit procédé comprenant une étape de réception du signal utile par des moyens de réception comprenant au moins deux portions de réception distinctes de même polarisation, chaque portion comprenant au moins un récepteur et un centre de phase, le signal utile, qui est le signal source rétrodiffusé par la cible, ayant un lobe de diffusion cohérente plus large que celui du signal non utile pour une longueur d'onde observée considérée et dans la direction allant de la cible vers le barycentre desdits moyens de réception, ledit procédé comprenant également une étape de traitements permettant la corrélation entre au moins deux signaux construits à partir de signaux reçus à un instant t, chacun desdits signaux reçus étant reçu par un récepteur d'une desdites au moins deux portions de réception distincte, **caractérisé en ce qu'**il comprend une étape consistant à disposer les centres de phase desdites au moins deux portions de réception de manière à ce qu'ils se situent tous les deux dans ledit lobe de diffusion cohérente du signal utile et à ce qu'ils ne se situent pas tous les deux dans ledit lobe de diffusion cohérente du signal non utile, de sorte à permettre auxdits traitements de distinguer l'éventuel signal utile du signal non utile, la distance minimale nécessaire entre lesdits centres de phase étant celle pour observer une première chute de la corrélation desdits aux moins deux signaux construits.

16. procédé selon la revendication précédente, **caractérisé en ce qu'**il comprend une étape de translation et de rotation desdites au moins deux portions de réception, permettant, en l'absence d'information suffisante sur le lobe de cohérence de l'éventuel signal utile et sur le lobe de cohérence du signal non utile, de déterminer, de manière expérimentale, la distance minimale nécessaire entre lesdits centres de phase pour observer la première chute du coefficient de corrélation desdits aux moins deux signaux construits, cette première chute étant caractéristique d'une sortie d'au moins l'un desdits centres de phase du lobe de diffusion cohérente du signal non utile, ce qui permet aux moyens de traitements, en cas de présence d'une cible, de distinguer le signal utile du signal non utile.

17. procédé selon l'une quelconque des revendications précédentes, **caractérisé en ce qu'**il comprend une étape d'émission coopérative d'un signal source, dit collaboratif, apte à être diffusé, par une cible située dans la zone observée, en direction desdits moyens de réception.

**Patentansprüche**

1. Vorrichtung zur passiven oder aktiven Erfassung eines Ziels, das in der Lage ist, ein Nutzsignal auszusenden, welches von einem kollaborativen oder nicht-kollaborativen Quellensignal kommen kann, das sich in einer beobachteten Zone befindet, die Elemente aufweist, welche Störechos erzeugen können, wobei die Störechos mit dem Rauschen ein nutzloses Signal formen, wobei die Vorrichtung Empfangseinrichtungen des Nutzsignals enthält, wobei das Nutzsignal, welches das vom Ziel rückgesendete Quellensignal ist, eine kohärente Sendekeule hat, die größer ist als diejenige des nutzlosen Signals für eine betrachtete beobachtete Wellenlänge und in der Richtung vom Ziel zum Baryzentrum der Stellungen der Empfangseinrichtungen, wobei die Empfangseinrichtungen enthalten:

o zu einem gegebenen Zeitpunkt t mindestens zwei unterschiedliche Empfangsabschnitte gleicher Polarisation, wobei jeder Abschnitt mindestens einen Empfänger und ein Phasenzentrum aufweist; und
o Verarbeitungseinrichtungen, die die Korrelation zwischen mindestens zwei Signalen erlauben, die ausgehend von im Zeitpunkt t empfangenen Signalen gebildet werden, wobei jedes der empfangenen Signale von einem Empfänger eines der mindestens zwei unterschiedlichen Empfangsabschnitte empfangen wird,

**dadurch gekennzeichnet, dass** die Phasenzentren der mindestens zwei Empfangsabschnitte so angeordnet sind, dass sie sich beide in der kohärenten Sendekeule des Nutzsignals befinden und sich nicht beide in der kohärenten Sendekeule des nutzlosen Signals befinden, um den Verarbeitungseinrichtungen zu ermöglichen, das mögliche Nutzsignal vom nutzlosen Signal zu unterscheiden, wobei der notwendige Mindestabstand zwischen den Phasenzentren derjenige ist, um einen ersten Abfall der Korrelation der mindestens zwei gebildeten Signale zu beobachten.

2. Erfassungsvorrichtung nach Anspruch 1, **dadurch gekennzeichnet, dass** der Abstand (Lr) zwischen den Phasenzentren der mindestens zwei Empfangsabschnitte größer ist als ein Mindestwert (Lc), entsprechend der Breite der Kohärenzkeule der nutzlosen Signale, die in Richtung der mindestens zwei Empfangsabschnitte ausgesendet werden, wobei die Breite der Kohärenzkeule der ausgesendeten nutzlosen Signale ausgehend von der Abmessung der beobachteten Zone abgeleitet von der Richtwirkung der Empfangseinrichtungen bestimmt wird.

3. Erfassungsvorrichtung nach einem der vorhergehenden Ansprüche, **dadurch gekennzeichnet, dass** die Phasenzentren der mindestens zwei Empfangsabschnitte sich in einer waagrechten Ebene und in gleichem Abstand von der Mitte des Ziels befinden.

4. Erfassungsvorrichtung nach einem der vorhergehenden Ansprüche, **dadurch gekennzeichnet, dass** sie eine Sendeantenne enthält, die das kollaborative Quellensignal sendet, wobei die Eigenschaften der Sendeantenne und des kollaborativen Quellensignals bekannt sind.

5. Erfassungsvorrichtung nach dem vorhergehenden Anspruch, **dadurch gekennzeichnet, dass**:

   • die Sendeantenne eine gegebene Breite hat und in etwa im gleichen Abstand von der Mitte der beobachteten Zone wie die Empfangsabschnitte angeordnet ist, wobei das von dieser Sendeantenne gesendete kollaborative Quellensignal sich auf dem Ziel reflektiert, um das von den Empfangseinrichtungen zu erfassende Nutzsignal zu formen;
   • der Abstand zwischen den Phasenzentren der mindestens zwei Empfangsabschnitte größer als die oder gleich der Breite der Sendeantenne ist.

6. Erfassungsvorrichtung nach einem der Ansprüche 4 bis 5, **dadurch gekennzeichnet, dass** die mindestens zwei Empfangsabschnitte sich zu beiden Seiten der Sendeantenne befinden.

7. Erfassungsvorrichtung nach einem der Ansprüche 4 bis 6, **dadurch gekennzeichnet, dass** die mindestens zwei Empfangsabschnitte je mindestens ein lineares Teilnetz aufweisen, das eine Vielzahl von Sensoren aufweist.

8. Erfassungsvorrichtung nach dem vorhergehenden Anspruch, **dadurch gekennzeichnet, dass** die mindestens zwei Empfangsabschnitte sind:

   • nicht kollinear zur Sendeachse der Sendeantenne;
   • nicht kollinear zu einer charakteristischen Richtung der beobachteten Zone, wobei die charakteristische Richtung zum Beispiel der nicht waagrechte Horizont einer Flanke eines Hügels oder eines Bergs oder auch diejenige von elektrischen Luftkabeln sein kann, um die von den zwei Antennenabschnitten empfangenen Signale auszugleichen, indem verhindert wird, dass einer der Abschnitte ein Signal sehr hoher Amplitude und der andere ein Signal sehr niedriger Amplitude empfängt, was für die Herstellung der Korrelation schädlich wäre.

9. Erfassungsvorrichtung nach einem der Ansprüche 7 bis 8, **dadurch gekennzeichnet, dass** die mindestens zwei Empfangsabschnitte nicht untereinander kollinear sind und eine kreuzförmige Antenne formen.

10. Erfassungsvorrichtung nach einem der vorhergehenden Ansprüche, **dadurch gekennzeichnet, dass** sie Schwenkeinrichtungen der Empfangsabschnitte enthält, um die die zwei Phasenzentren verbindende Achse gemäß einem gewählten Winkel auszurichten.

11. Erfassungsvorrichtung nach einem der vorhergehenden Ansprüche, **dadurch gekennzeichnet, dass** sie Verschiebeeinrichtungen der mindestens zwei Empfangsabschnitte enthält, um über einen gewählten Abstand den ihr Phasenzentrum trennenden Abstand zu regeln.

12. Erfassungsvorrichtung nach einem der vorhergehenden Ansprüche, **dadurch gekennzeichnet, dass** sie ein Netz einer Vielzahl von Phasenzentren enthält, deren Kombination der Signale der Sensoren paarweise genommen es ermöglicht, die Abmessungen des Ziels in mehreren Richtungen zu schätzen.

**13.** Erfassungsvorrichtung nach einem der vorhergehenden Ansprüche, **dadurch gekennzeichnet, dass** sie aufweist:

- eine Antennenverarbeitungsvorrichtung, die für jeden der mindestens zwei Abschnitte ausgehend von den Basissignalen ihrer Sensoren eines oder mehrere kombinierte Signale bildet;
- eine Signalverarbeitungsvorrichtung, die das Rauschen der von den Abschnitten stammenden kombinierten Signale filtern kann;
- eine Vorrichtung zur Berechnung der Korrelationskoeffizienten zwischen von den Abschnitten stammenden kombinierten Signalen;
- eine Vorrichtung, die ein Erfassungssignal erzeugt, wenn einer der Korrelationskoeffizienten eine erste vorbestimmte Schwelle überschreitet.

**14.** Erfassungsvorrichtung nach einem der vorhergehenden Ansprüche, **dadurch gekennzeichnet, dass** die Korrelationskoeffizienten genormt sind.

**15.** Verfahren zur passiven oder aktiven Erfassung eines Ziels, das in der Lage ist, ein Nutzsignal auszusenden, welches von einem kollaborativen oder nicht-kollaborativen Quellensignal kommen kann, das sich in einer beobachteten Zone befindet, die Elemente aufweist, welche Störechos erzeugen können, wobei die Störechos mit dem Rauschen ein nutzloses Signal formen, wobei das Verfahren einen Schritt des Empfangs des Nutzsignals durch Empfangseinrichtungen enthält, die mindestens zwei unterschiedliche Empfangsabschnitte gleicher Polarisation enthalten, wobei jeder Abschnitt mindestens einen Empfänger und ein Phasenzentrum enthält, wobei das Nutzsignal, welches das vom Ziel rückgesendete Quellensignal ist, eine kohärente Sendekeule hat, die breiter ist als diejenige des nutzlosen Signals für eine betrachtete beobachtete Wellenlänge und in der Richtung, die vom Ziel zum Baryzentrum der Empfangseinrichtungen geht, wobei das Verfahren ebenfalls einen Verarbeitungsschritt enthält, der die Korrelation zwischen mindestens zwei Signalen erlaubt, die ausgehend von zu einem Zeitpunkt t empfangenen Signalen gebildet werden, wobei jedes der empfangenen Signale von einem Empfänger eines der mindestens zwei unterschiedlichen Empfangsabschnitte empfangen wird, **dadurch gekennzeichnet, dass** es einen Schritt enthält, der darin besteht, die Phasenzentren der mindestens zwei Empfangsabschnitte so anzuordnen, dass sie sich beide in der kohärenten Sendekeule des Nutzsignals befinden und dass sie sich nicht beide in der kohärenten Sendekeule des nutzlosen Signals befinden, um es den Verarbeitungen zu erlauben, das mögliche Nutzsignal vom nutzlosen Signal zu unterscheiden, wobei der notwendige Mindestabstand zwischen den Phasenzentren derjenige ist, um einen ersten Abfall der Korrelation der mindestens zwei gebildeten Signale zu beobachten.

**16.** Verfahren nach dem vorhergehenden Anspruch, **dadurch gekennzeichnet, dass** es einen Schritt der Translationsverschiebung und Drehung der mindestens zwei Empfangsabschnitte enthält, was es in Abwesenheit einer ausreichenden Information über die Kohärenzkeule des möglichen Nutzsignals und über die Kohärenzkeule des nutzlosen Signals ermöglicht, experimentell den notwendigen Mindestabstand zwischen den Phasenzentren zu bestimmen, um den ersten Abfall des Korrelationskoeffizienten der mindestens zwei gebildeten Signale zu beobachten, wobei dieser erste Abfall für einen Ausgang mindestens eines der Phasenzentren der kohärenten Sendekeule des nutzlosen Signals charakteristisch ist, was es den Verarbeitungseinrichtungen ermöglicht, im Fall des Vorhandenseins eines Ziels, das Nutzsignal vom nutzlosen Signal zu unterscheiden.

**17.** Verfahren nach einem der vorhergehenden Ansprüche, **dadurch gekennzeichnet, dass** es einen Schritt des kooperativen Sendens eines so genannten kollaborativen Quellensignals enthält, das von einem Ziel, das sich in der beobachteten Zone befindet, in Richtung der Empfangseinrichtungen ausgesendet werden kann.

**Claims**

**1.** Detection device, passive or active, for detecting a target able to scatter a useful signal that may originate from a collaborative or non-collaborative source signal, and situated in an observed zone comprising elements able to generate clutter echoes, said clutter echoes forming, together with noise, a non-useful signal, said device comprising means for receiving the useful signal, the useful signal, which is the source signal backscattered by the target, having a wider coherent scattering lobe than that of the non-useful signal for a considered observed wavelength and in the direction going from the target to the barycenter of the positions of said reception means, said reception means comprising:

o at a given instant t, at least two distinct reception portions of like polarization, each portion comprising at least one receiver and one phase center; and

o processing means allowing correlation between at least two signals constructed from signals received at said instant t, each of said received signals being received by a receiver of one of said at least two distinct reception portions,

**characterized in that** the phase centers of said at least two reception portions are disposed in such a way as to both be situated in said coherent scattering lobe of the useful signal and to not both be situated in said coherent scattering lobe of the non-useful signal, so as to allow said processing means to distinguish the possible useful signal from the non-useful signal, the necessary minimum distance between said phase centers being that for observing a first drop in the correlation of said at least two constructed signals.

2. Detection device according to claim 1, **characterized in that** the distance (Lr) between the phase centers of said at least two reception portions is greater than a minimum value (Lc), corresponding to the width of the coherence lobe of the non-useful signals scattered in the direction of said at least two reception portions, the width of the coherence lobe of the scattered non-useful signals being determined from the dimension of the observed zone deduced from the directivity of the reception means.

3. Detection device according to any one of the preceding claims, **characterized in that** the phase centers of said at least two reception portions are situated in a horizontal plane and at the same distance from the center of the target.

4. Detection device according to any one of the preceding claims, **characterized in that** it comprises a transmission antenna transmitting said collaborative source signal, the characteristics of the transmission antenna and of said collaborative source signal being known.

5. Detection device according to the preceding claim, **characterized in that**:

   ■ the transmission antenna is of given width and placed approximately at the same distance from the center of the observed zone as the reception portions, the collaborative source signal transmitted by this transmission antenna being reflected on the target to form the useful signal to be detected by the reception means;
   ■ the distance between the phase centers of said at least two reception portions is greater than or equal to the width of the transmission antenna.

6. Detection device according to claim 4 or 5, **characterized in that** said at least two reception portions are situated on either side of the transmission antenna.

7. Detection device according to any one of claims 4 to 6, **characterized in that** said at least two reception portions each comprise a linear sub-array comprising a plurality of sensors.

8. Detection device according to the preceding claim, **characterized in that** said at least two reception portions are:

   ■ non-collinear with the transmission axis of the transmission antenna;
   ■ non-collinear with a characteristic direction of said observed zone, the characteristic direction being able to be for example the non-horizontal horizon of a hillside or mountainside, or else that of aerial electrical cables so as to balance the signals received by the two antenna portions by preventing one of the portions from receiving a signal of very large amplitude and the other a signal of very small amplitude, which would be an impediment to correlation.

9. Detection device according to any one of claims 7 to 8, **characterized in that** said at least two reception portions are not mutually collinear and form a cruciform antenna.

10. Detection device according to any one of the preceding claims, **characterized in that** it comprises means for pivoting the receiving portions in such a way as to orient the axis joining the two phase centers according to a chosen angle.

11. Detection device according to any one of the preceding claims, **characterized in that** it comprises means for displacing said at least two reception portions in such a way as to adjust in relation to a chosen distance the distance separating their phase center.

12. Detection device according to any one of the preceding claims, **characterized in that** it comprises an array of a plurality of phase centers, for which the combination of the signals of the sensors taken pairwise makes it possible to estimate the dimensions of said target in several directions.

13. Detection device according to any one of the preceding claims, **characterized in that** it comprises:

- an antenna processing device forming, for each of said at least two portions, from the base signals of their sensors, one or more combined signals;
- a signal processing device able to filter the noise of the combined signals coming from said portions;
- a device for computing the coefficients of correlation between combined signals coming from said portions;
- a device generating a detection signal when one of said correlation coefficients exceeds a first predetermined threshold.

14. Detection device according to any one of the preceding claims, **characterized in that** the correlation coefficients are normed.

15. Detection method, passive or active, for detecting a target able to scatter a useful signal that may originate from a collaborative or non-collaborative source signal, and situated in an observed zone comprising elements able to generate clutter echoes, said clutter echoes forming, together with noise, a non-useful signal, said method comprising a step of receiving the useful signal by reception means comprising at least two distinct reception portions of like polarization, each portion comprising at least one receiver and one phase center, the useful signal, which is the source signal backscattered by the target, having a wider coherent scattering lobe than that of the non-useful signal for a considered observed wavelength and in the direction going from the target to the barycenter of said reception means, said method also comprising a step of processings allowing correlation between at least two signals constructed from signals received at an instant t, each of said received signals being received by a receiver of one of said at least two distinct reception portions, **characterized in that** it comprises a step consisting in disposing the phase centers of said at least two reception portions in such a way that they are both situated in said coherent scattering lobe of the useful signal and that they are not both situated in said coherent scattering lobe of the non-useful signal, so as to allow said processings to distinguish the possible useful signal from the non-useful signal, the necessary minimum distance between said phase centers being that for observing a first drop in the correlation of said at least two constructed signals.

16. Method according to the preceding claim, **characterized in that** it comprises a step of translating and rotating said at least two reception portions, making it possible, in the absence of sufficient information on the coherence lobe of the possible useful signal and on the coherence lobe of the non-useful signal, to determine, in an experimental manner, the necessary minimum distance between said phase centers for observing the first drop in the correlation coefficient of said at least two constructed signals, this first drop being characteristic of an exit of at least one of said phase centers from the coherent scattering lobe of the non-useful signal, thereby allowing the processing means, in the case of presence of a target, to distinguish the useful signal from the non-useful signal.

17. Method according to any one of the preceding claims, **characterized in that** it comprises a step of cooperatively transmitting a so-called collaborative source signal, able to be scattered, by a target situated in the observed zone, in the direction of said reception means.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007002396 A
- GB 2356096 A
- WO 05050786 A
- WO 02062005 A